# EUROPEAN PATENT SPECIFICATION

(11) **EP 1 453 592 B1**
(45) Date of publication and mention of the grant of the patent: **23.12.2009**
(21) Application number: 02752380.2
(22) Date of filing: 16.07.2002
(51) Int. Cl.: B01D 61/02, C02F 1/44, F15B 3/00, B01D 61/06, B01D 61/12, B01D 65/08

(54) **DUAL HEAD PUMP DRIVEN MEMBRANE SYSTEM**
DURCH DOPPELKOPFPUMPE ANGETRIEBENES MEMBRANSYSTEM
SYSTEME DE MEMBRANE ACTIONNE PAR UNE POMPE A TETE DOUBLE

(30) Priority: 16.07.2001 US 305912 P
(43) Date of publication of application: 08.09.2004
(73) Proprietor: MIOX Corporation, Albuquerque, New Mexico 87109 (US)
(72) Inventor: HERRINGTON, Rodney, E., Albuquerque, NM 87114 (US); HAND, Frank, R., Albuquerque, NM 87112 (US)
(74) Representative: Kupecz, Arpad
(86) International application number: PCT/US2002/022618
(87) International publication number: WO 2003/008076

(56) References cited:
- EP-A- 0 352 902
- WO-A-99/02245
- DE-A1- 19 748 997
- US-A- 4 187 173
- US-A- 4 288 326
- US-A- 4 861 487
- US-A- 5 496 466
- US-A- 5 503 736
- US-A- 5 531 887
- US-A- 6 017 200
- US-A- 6 017 200
- US-B1- 6 203 696
- US-E- R E32 144

## Description

### BACKGROUND OF THE INVENTION

### Field of the Invention (Technical Field):

The present invention relates to removing particulate and dissolved solids from water by spiral wrapped membrane elements utilizing a dual head pump system that incorporates pressure recovery, pulsing, fixed recovery (ratio of permeate to feed), and thin feed spacer spiral wrapped membrane elements. The maximum benefit of the system is achieved when reverse osmosis ("RO") is utilized as the membrane technology due to the high pressures inherent in RO membrane processes. However, the system of the present invention is also effective on microfiltration, ultrafiltration, and nanofiltration membrane systems. More particularly the present invention relates to alternative means to increase the production of potable water per unit size of membrane element and to reduce the energy cost per unit volume of water treated.

### Background Art:

Prior art devices that engage in reverse osmosis filtration for water purification employ neither the present invention's differential pressure control nor its spring device method.

U.S. Patent No. 5,496,466, to Gray, discloses a portable water purification system with a double piston pump comprising a feed water piston in a feed water cylinder, a concentrate pumping section for removing concentrate from concentrate output, and a concentrate pumping section including a concentrate cylinder and piston wherein the pistons move In opposite axially directions. Gray does not teach differential pressure control or use of a spring or other mechanism for storing energy to average out the forces of the respective strokes. Further, Gray teaches use of a two-piston system only.

U.S. Patent No. 5,503,736, to Schoenmeyr, discloses a booster pump for a reverse osmosis water purification system wherein the pump has a spring return piston stroked by the pressure of feedwater and a pair of solenoid control valves (controlled by a piston position detector switch) that control the flow of feedwater into and out of the pump to move the piston between stroke and return positions. The Schoenmeyr patent, while disclosing a single piston, employs a two-headed piston with solenoid control valves and a control circuit system, unlike the differential pressure activated valve of the present invention.

Additional tangentially related prior art includes: U.S. Patent No. 5,589,066, to Gray; U.S. Patent No. 5,865,980 to Patapoff et al.; U.S. Patent No. 3,966,364, to Bachle et al.; U.S. Patent No. 5,531,887, to Miers; U.S. Patent No. 4,740,301, to Lopez; and U.S. Patent No. 3,830,372, to Manjikian.

US patent 6,017,200 discloses an integrated pumping and/or energy recovery system.

### SUMMARY OF THE INVENTION (DISCLOSURE OF THE INVENTION)

The present invention is of a pumping apparatus according to claim 1 and method according to claim 27 comprising: providing a dual head pump comprising a primary feed head comprising a feed diaphragm and a secondary retentate head comprising a retentate diaphragm; pumping fluid to at least one membrane surface; transferring force from the retentate diaphragm to the feed diaphragm to recovery energy; providing a fixed recovery via the two heads; and imparting a pulsing pressure wave on the membrane surface. In the preferred embodiment, pumping fluid comprises providing feed fluid to a reverse osmosis membrane, preferably with at least one thin feed spacer element, and most preferably with at least one spiral wrapped element. Differential pressure is provided by a dual activated valve, pulsing is preferably hydraulic, and a plurality of membrane surfaces are provided, preferably wherein the spacing is reduced between the membrane surfaces to improve diffusion.

Objects, advantages and novel features, and further scope of applicability of the present invention will be set forth in part in the detailed description to follow, taken In conjunction with the accompanying drawing, and in part will become apparent to those skilled In the art upon examination of the following, or may be learned by practice of the invention. The objects and advantages of the invention may be realized and attained by means of the instrumentalities and combinations particularly pointed out in the appended claims.

### BRIEF DESCRIPTION OF THE DRAWING

The accompanying drawing, which is incorporated into and forms a part of the specification, illustrates one or more embodiments of the present invention and, together with the description, serves to explain the principles of the invention. The drawing is only for the purpose of illustrating one or more preferred embodiments of the invention and is not to be construed as limiting the invention. In the drawings:

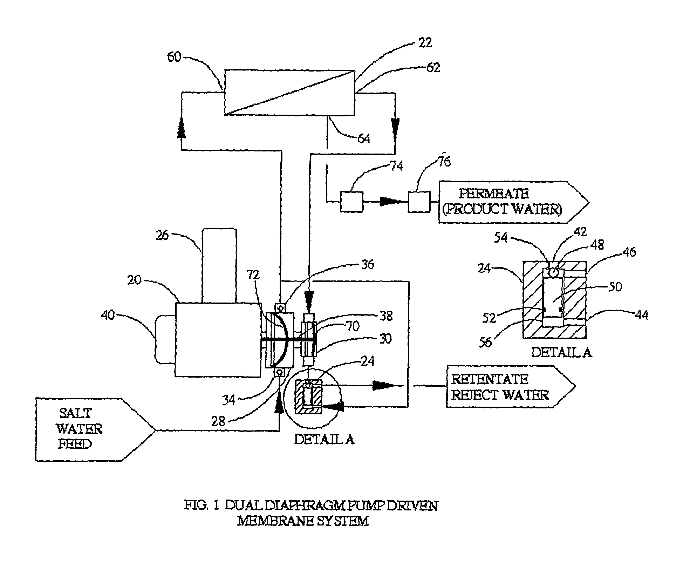

Fig. 1 is a block diagram of the overall system of the present invention.

### DESCRIPTION OF THE PREFERRED EMBODIMENTS

### (BEST MODES FOR CARRYING OUT THE INVENTION

The present invention is of a motor driven dual headed pump that incorporates a differential pressure activated ("DPA") valve to provide a system that incorporates all of the innovations discussed previously. High Total Dissolved Solids ("TDS") feed water (e.g., seawater or brackish water) is sucked into the primary diaphragm head of a dual-headed diaphragm pump. The primary head of the pump is the larger of the two pump heads. Check valves on the inlet and exit of the pump head force water to be directed in one direction only through the pump head. As feed water discharges through the primary pump head 28 (Fig. 1), the feed water enters the feed end of the RO element housing. Water passes longitudinally through the RO element. A portion of the water passes through the membrane producing clean permeate water. The remaining water is higher TDS concentration (relative to the TDS of the feed water) that is retentate discharge from the RO element. The retentate is directed to the second, smaller diaphragm pump head. The ratio of the sizes of the pump heads explicitly define the recovery of the RO system. With the smaller pump head being, e.g., 70 percent, of the volume of the primary pump head, the recovery of the system is approximately 30 percent. In other words, 30 percent of the feed volume is forced through the membranes of the RO element, thereby producing a permeate volume that is 30 percent of the feed. Various recovery ratios may be used depending upon the configuration of the system, and the fluid being treated. This feature addresses a first benefit of the invention, namely, enhanced recovery.

Incorporating RO elements in the system with a thin feed spacer provide additional capacity to the system. By utilizing the thin spacer, the capacity of an existing RO plant is increased significantly by simply replacing existing technology RO elements with the thin feed spacer elements, and then adding the dual diaphragm pump system to provide the benefits of that system.

Diaphragm pumps produce an inherent pulse to the fluid flow stream. This is by virtue of the reciprocal motion of the pump stroke mechanism. In conventional diaphragm pumps, the stroke of the pump is controlled by an adjustable eccentric mechanism within the gear housing of the pump. This is usually controlled by a control knob or motor drive on the exterior of the pump. The frequency of the pump is controlled by the speed of the drive motor on the pump. Most diaphragm pumps manufactured today can be driven by a variable speed motor. This combination of stroke length and speed control allow variability of all key operational parameters that are important to optimizing the flow characteristics within the RO element. In addition, by monitoring torque on the pump drive motor, the stroke length and frequency are electronically optimized, or tuned, so that the optimal stroke and frequency are established for the RO element size and hydraulic system in question. The optimum conditions are achieved when the torque (or load) on the motor is minimized at the rated flow rate of the membrane element. This feature addresses the benefits from fluid flow pulsing.

Another advantage is realized by connecting the two different sized pump diaphragms together. The feed pressure to the RO element is roughly equal to the retentate (or discharge) pressure from the RO element. Theoretically, flow through the feed spacer in the RO element is zero. Practically, there may be a pressure drop of ten percent across the element. For purposes of example, assume that there is no pressure drop across the element. This means that the same pressure is applied on the large diaphragm pump head as there is on the small diaphragm pump head. By connecting the two diaphragms with a common shaft, hydraulics in the pump heads set up so that force on the small head opposes, or offsets, the force on the large head. Therefore, the net working force on the pump is equal to the value of the recovery of the RO element. In the example discussed here, the force generated by the small pump head (70 percent) offsets the force on the large head (100 percent) so that the net force required to operate the system is 30 percent. This is defined as pressure recovery. Stated in another fashion, the energy required to operate the RO system is 30 percent of that required to operate a system that is comprised of one diaphragm. Indeed, conventional RO plants use high pressure pumps to provide the feed pressure for the RO elements, with no attempts to utilize pressure recovery. This feature alone can save 70 percent of the energy required to operate an RO plant.

Thin feed spacers that provide more element surface in the RO element, combined with pressure recovery, can easily produce a 100 percent improvement in kilowatt per gallon of water produced. Pulsing benefits are not impacted by these two features. Pulsing contributes additional benefits that are not degraded by the additional RO surface area or the pressure recovery features.

All five of the benefits discussed above are not necessarily mutually beneficial. For example, the benefits of diffusion may be offset by pulsing.

The system integrates five features, or combinations thereof, of membrane technology for water treatment. The five features comprise the use of: (1) thin feed spacer spiral wrapped elements; (2) enhanced recovery (ratio of feed to permeate); (3) diffusion effects; (4) fluid pulsing; and (5) pressure recovery. The system offers maximum benefit for reverse osmosis (RO) membranes due to the high working pressures associated with seawater desalination. Those of ordinary skill in the art of membrane technology will recognize that this system also has benefit for fluids other than water, and for membrane technology that includes microfiltration, ultrafiltration, and nanofiltration, in addition to the obvious advantages to RO technology.

The preferred embodiment is illustrated in Fig. 1. As shown therein, pump **20** comprises a diaphragm pump design with two diaphragm heads, primary or feed head **28,** and secondary or retentate head **30.** In an alternate embodiment, the pump can be a plunger type pump, a hydraulic activated diaphragm pump, a solenoid activated pump, or other configuration. One key feature of the preferred pump configuration is that the pump imparts a pulsing fluid and pressure wave on the fluid being transferred. Another primary feature of pump **20** is that pump feed diaphragm **72** and retentate diaphragm **70** are connected mechanically by shaft **38** or hydraulically in order that the fluid pressure acting on retentate head **30** transfers force to feed head **28.** The interconnectivity of feed diaphragm **72** and retentate diaphragm **70** ensures that fluid pressure on the left side (Fig. **1**) of the diaphragm of retentate head **30** partially offsets fluid pressure on the right side of the diaphragm in feed head **28.** This feature provides pressure recovery and significantly reduces the total energy to operate the system versus a system that utilizes feed pressure only.

High TDS feed water (e.g., seawater) enters or is sucked into feed head **28** at feed head inlet port **34.** Lower TDS feed water (i.e., brackish water) or other waters of varying degrees of ion concentration also benefit from this system. Feed head inlet port **34** incorporates a check valve that prevents backflow of water out of feed head **28** during the pressure stroke of pump **20.** Fluid is compressed on the right side of feed diaphragm **72** and is expelled out of feed head discharge port **36.** Feed head discharge port **36** incorporates a check valve to prevent fluid downstream of feed head **28** from returning to feed head **28** during the suction stroke of pump **20.** Fluid discharged from feed head **28** discharge port **36** is transferred to feed inlet port **60** on RO element **22.**

Benefits of thin feed spacer designs in RO elements are discussed below. These benefits include more membrane surface per RO element volume, concentration polarization reduction via TDS diffusion effects, and increased surface velocity and shear, all of which contribute to increased RO element throughput and product water quality. Although thin feed spacers are preferable in the system of the present invention, conventional feed spacer elements may also be used. Thin feed spacer elements improve the overall efficiency and throughput of the system because there is more membrane area in the same element size housing.

Permeate, or product water, from RO element **22** is discharged through permeate water port **64.** High TDS retentate water is discharged from RO element **22** via retentate discharge port **62.** Assuming no expansion of RO element **22** and hydraulic lock of the system (no air), the law of conservation of mass dictates that the volume of water entering RO element **22** inlet port **60** equals the sum of the volume of water discharged at permeate discharge port **64** and retentate discharge port **62.** Recovery in an RO element is defined as the volume of permeate (or product water) discharged from an RO element versus the feed water entering the element. Therefore, the recovery of an RO element is explicitly defined by the ratio of the swept volume of pump **20** feed head **28** versus the volume of retentate head **30.** The difference in volume between the RO element feed volume and the retentate volume is the permeate, or product water, volume.

In order for energy recovery as well as fixed recovery (ratio of permeate to feed) to work, the discharge port retentate head **30** is closed in order for pressure to build up in the system. The ultimate pressure obtained is a function of the osmotic pressure of the feed water in RO element **22.** Closure of the discharge port of retentate pump head **30** is achieved with differential pressure activated (DPA) valve **24.** DPA valve **24** is activated by equal pressures applied across different diameter ports in DPA valve **24.** Pressure is acted on the circular area of the back of piston **50** which is defined by the diameter of DPA valve bore **56.** The force on the back of piston **50** is defined by the pressure multiplied by the area. The force on the front of piston **50** is defined by inlet port **42** diameter **54** of DPA valve **24.** Since the pressures are unequal (feed and retentate), piston 50 is driven home with greater force on the rear of piston **50** to seal inlet port **42.** Port **42** remains sealed during the compression stroke of pump **20.** On the return stroke of pump **20,** pressure in the system is relieved and there is no net force applied to piston **50** in DPA valve **24** to seal port **42.** On the return stroke of pump **20,** fluid on the left side of diaphragm **70** is driven through port **42** of DPA valve **24** and is expelled out of retentate discharge port **46.** Fluid cannot back flow out of the inlet port of retentate head **30** since RO element **22** is a closed system and check valve **36** in feed head **28** will not allow return of fluid to feed head **28.**

The appropriate fluid pulse amplitude and frequency significantly improves permeate throughput and quality for any given unit area of membrane surface. Due to fluid dynamic considerations, the optimal fluid amplitude and frequency for any given RO element configuration is unique to that configuration. Amplitude of a diaphragm pump is defined by the stroke length of pump **20.** A shorter stroke produces less amplitude (volume of fluid per stroke). Stroke length (amplitude) is controlled on diaphragm pump **20** by virtue of manual or motor driven eccentric control knob **40.** Likewise, the frequency of the pump stroke is explicitly controlled by the rotational speed of pump motor **26.** By virtue of the appropriate controls, amplitude and frequency can be controlled either manually or electronically. By empirically determining the appropriate amplitude and frequency for a given RO element configuration, the correct amplitude and frequency can be dialed in manually to achieve optimal throughput and permeate quality. Conversely, a feedback control loop can be programmed into a computer to allow the pump to electronically optimize product throughput and quality.

The three key parameters are easily measured. First, energy into the system can be optimized by measuring the amperage load on pump motor **26.** Second, permeate, or product water, quality can be easily measured by conductivity meter **74** which measures the TDS in the product water and verifies performance of RO elements. The third and final element is permeate flow rate. This is preferably measured by flow transmitter **76.** Likewise, since the recovery of the system is explicitly defined by the ratio of the swept volumes of feed head **28** versus retentate head **30,** then the permeate flow rate is easily determined by the frequency and amplitude of pump **20.** The frequency is electronically monitored by the speed of pump motor **26,** and the amplitude is preferably monitored by the motor position of stroke control knob **40.** Optimization control schemes use hardware and software programmable logic controllers ("PLC"). The system is preferably optimized by using a PLC to monitor the pump motor amplitude and speed, product water quality and flow rate to optimize the efficiency of the system.

Significant features of the system of the present invention are that the two interconnected heads of the pump simultaneously provide: (1) a fixed recovery (ratio of product water to feed water); (2) the two interconnected heads provide energy recovery by transferring force from the retentate diaphragm to the feed diaphragm; and (3) the pump imparts a pulsing pressure (and fluid) wave on the RO element.

### Industrial Applicability:

The invention is further illustrated by the following non-limiting examples.

### Examples

The present invention was developed under a contract funded the U.S. Department of Defense's Defense Advanced Research Projects Agency ("DARPA") to produce a small portable system that will allow individual soldiers to treat any water anywhere to drinking water quality. The research did not focus on membrane chemistry, but rather construction and hydraulic flow characteristics of spiral-wrapped RO element designs. Concurrent with design of the RO elements, a hand pump device was developed that utilizes various features including a simple differential pressure activated valve to produce pressure recovery in the pump to significantly reduce the applied force required to operate the pump.

Advantages of the invention, as demonstrated by the research, include as follows:
Enhanced Recovery. Recovery is defined as the amount of permeate water (clean product water) divided by the volume of feed water that enters an RO element. Typically, RO elements operating on seawater utilize a recovery of 10 percent or less. Extensive tests were conducted on the membranes to determine the amount of water that can be driven through a membrane and still produce acceptable quality permeate. These studies showed that a 30 percent recovery was feasible using the present invention.
Thin Feed Spacer. The feed spacer in a spiral wrapped RO element was constructed of a plastic web mesh that held the faces of the membranes apart so that feed water could flow longitudinally down the length of the element with minimal pressure loss while allowing the water to cross the membrane. On the opposite side of the membrane leaf was the permeate carrier. The permeate carrier was a porous but more structurally rigid material that withstood compression from the membrane surface, but allowed the permeate to flow spirally to a central collection tube where the permeate was collected. Current construction techniques limit existing feed spacer thickness to approximately .011 inches thick. Most RO elements utilize feed spacers that are approximately .025 inches thick. Hydraulic calculations indicated that a feed spacer that is .003 inches thick is adequate to allow flow through the element. The primary advantage of a thin feed spacer is that more membrane element material can be wrapped into a smaller diameter RO element housing, thereby significantly increasing the membrane surface in the RO element. More membrane surface equates to more product water throughput.
Diffusion Effect. Concentration polarization is defined as the buildup, or accumulation, of total dissolved solids (TDS) at the surface of the membrane. As water molecules flow through the membrane surface, ions are rejected and are retained on the feed side of the membrane material. This accumulation of ions represents an increase in the TDS at the surface of the membrane, thereby increasing the osmotic pressure required to drive the water molecules through the membrane surface. The negative result is higher operating pressures and lower production. Diffusion effects (tendency of molecules to diffuse uniformly in a solution) were improved with reduced separation between the membrane faces. Coincidentally, diffusion effects were dramatically improved when the separation between the membrane surfaces approached 0.003 inches. Improved diffusion resulted in reduced concentration polarization resulting in higher permeate quality and throughput. Another feature of thin feed spacers that is conducive to lower TDS is the increased fluid shear which is produced with higher fluid velocity that results from equivalent volumes of feed water traversing a thinner feed spacer thickness.
Hydraulic Feed Water Pulsing. Pulsing of the feed stream to an RO element has a beneficial effect for reduction of concentration polarization, and subsequent improvement in product water throughput. Tests conducted verified this effect, and show improvements, in some cases, greater than 100 percent in product water throughput versus steady flow. These same tests also demonstrated applied pressure reductions of 18 to 19 percent. In other words, in steady flow tests, 800 psi is required to produced acceptable quality permeate. With pulsing, the mean operating pressure to produce the same permeate volume and quantity was 650 psi. Each RO element physical configuration had an optimal frequency and fluid amplitude to achieve maximum performance.
Pressure Recovery via Differential Pressure Activated ("DPA") Valve. During development of the hand held manual RO pump of the invention, a DPA valve was developed that significantly simplified the design of a hand-held RO pump and enabled a pressure recovery feature that significantly reduced the force required to operate the pump. This pump had only three metal parts, namely three stainless steel springs that acted to load check valves in the pump. All other components of the pump were injection molded, thereby producing a simplified RO hand-held pump that is a low cost and therefore is disposable.

The preceding examples can be repeated with similar success by substituting the generically or specifically described reactants and/or operating conditions of this invention for those used in the preceding examples.

## Claims

1. A filtration system comprising:
i a filtration element (22) with
ii a feed inlet (60) and each a permeate (64) and retentate outlet (62)
iii a dual head pump comprising
iv a primary feed head (28) connected to the feed side of the filtration element (22) and
v a secondary retentate head (30) connected to the retentate side of the filtration element (22)
vi both heads comprising different swept volumes
vii with both heads in mechanical or hydraulic connection (38)
viii such that a force on said secondary retentate head (30) offsets a force on said primary feed head (28)
ix wherein said two heads (28,30) provide a fixed recovery, and
x said system comprises a membrane filtration element, **characterized by**
xi a differential pressure valve (24)
xii which is hydraulically actuated,
xiii wherein said valve (24) seals a discharge port of said retentate head (30) when the feed pressure exceeds the retentate pressure,

2. The filtration system of claim 1 wherein said pump is a diaphragm pump.

3. The filtration system of claim 1 wherein said two heads (28,30) comprise diaphragms (70,72) of differing radii.

4. The filtration system of claim 1 wherein said secondary retentate head (30) is smaller than said primary feed head (28).

5. The filtration system of claim 1 wherein said connection is a shaft (38).

6. The filtration system of claim 1 wherein said connection (38) and said valve (24) provide a pressure recovery to said filtration system.

7. The filtration system of claim 6 wherein said pressure recovery reduces energy required to operate said filtration system.

8. The filtration system of claim 1 wherein said filtration element (22) comprises a reverse osmosis element.

9. The filtration system of claim 8 wherein said reverse osmosis element comprises a spiral wrapped element.

10. The filtration system of claim 9 wherein said spiral wrapped element comprises:
at least one membrane; and
at least one thin feed spacer.

11. The filtration element of claim 10 wherein said at least one thin feed spacer comprises a plastic web mesh.

12. The filtration system of claim 10 wherein said at least one thin feed spacer is less than approximately .025 inches thick.

13. The filtration system of claim 10 wherein said at least one thin feed spacer is less than approximately .011 inches thick.

14. The filtration system of claim 10 wherein said at least one thin feed spacer provides for a reduction in an amount of total dissolved solids at a surface of said membrane.

15. The filtration system of claim 1 wherein at least one parameter of said optimized pulsed fluid flow is determined by a configuration of said filter element.

16. The filtration system of claim 15 wherein said parameter comprises pulse frequency and pulse amplitude.

17. The filtration system of claim 15 comprising at least one control to vary said parameters.

18. The filtration system of claim 17 wherein said control is manual.

19. The filtration system of claim 17 wherein said control is automatic.

20. The filtration system of claim 17 further comprising at least one permeate quality monitoring device.

21. The filtration system of claim 20 wherein said at least one permeate quality monitoring device comprises a flow meter.

22. The filtration system of claim 20 wherein said at least one permeate quality monitoring device measures total dissolved solids.

23. The filtration system of claim 22 wherein said at least one permeate quality monitoring device comprises a conductivity meter.

24. The filtration system of claim 20 further comprising a feedback loop, wherein said control is varied to optimize a quality of permeate as determined by said permeate quality monitoring device.

25. The filtration system of claim 24 further comprising an electrical measurement device, wherein said electrical measurement device measures an amperage load on said system.

26. The filtration system of claim 25 wherein said control is varied additionally to minimize said amperage load on said system.

27. A method for filtering a substance comprising the steps of:
providing at least one filtration element (22);
pumping a pulsed flow of the substance to the filtration element (22) using a dual head pump, the dual head pump comprising a primary feed head (28) connected to the feed side of the filtration element (22) and a secondary retentate head (30) connected to the retentate side of the filtration element (22) and in mechanical or hydraulic connection with the primary feed head, wherein the primary feed head (28) and secondary retentate head (30) comprise different swept volumes and a fixed recovery;
offsetting a force on the primary feed head (28) with a force on the secondary retentate head (30); and sealing a discharge port of the retentate head with a hydraulically actuated valve differential pressure actived when a feed pressure exceeds a retentate pressure.

28. The method of claim 27 wherein the step of providing a pump comprises providing a diaphragm pump.

29. The method of claim 27 wherein the step of providing a dual head pump further comprises providing a pressure recovery.

30. The method of claim 29 wherein the step of providing a pressure recovery further comprises reducing energy required to filter the substance.

31. The method of claim 27 wherein the step of providing a filtration element (22) comprises providing a reverse osmosis element.

32. The method of claim 31 wherein the step of providing a reverse osmosis element comprises providing a spiral wrapped element.

33. The method of claim 32 wherein the step of providing a spiral wrapped element comprises providing at least one membrane and at least one thin feed spacer in the element.

34. The method of claim 33 wherein the step of providing at least one membrane and at least one thin feed spacer in the element comprises reducing the amount of total dissolved solids at a surface of the membrane.

35. The method of claim 27 wherein the step of varying at least one parameter of the pulsed flow comprises varying a pulse frequency and a pulse amplitude.

36. The method of claim 27 wherein the step of varying at least one parameter of the pulsed flow further comprises measuring a desired characteristic of permeate.

37. The method of claim 36 wherein the step of measuring the desired characteristic of the permeate comprises measuring a permeate flow rate.

38. The method of claim 36 wherein the step of measuring the desired characteristic of the permeate comprises measuring total dissolved solids in the permeate.

39. The method of claim 36 wherein the step of varying at least one parameter of the pulsed flow further comprises measuring an amperage load on the pump.

40. The method of claim 39 wherein the step of measuring the amperage load on the pump further comprises minimizing the amperage load on the pump.

41. The method of claim 39 further comprising providing a feedback loop to automatically vary the parameter of the pulsed flow, thereby optimizing the desired characteristic of the permeate and pump.

42. The pressure recovery filtration system of claim 1 wherein said valve comprises an inlet port connected to said retentate head (30) and an inlet port connected to said feed head (20).

43. The pressure recovery filtration system of claim 1 wherein said valve actuates according to a relative pressure difference between said inlet ports.

## Patentansprüche

1. Ein Filtrationssystem, das folgendes umfasst:
i. ein Filtrationselement (22) mit
ii. einem Zulaufeinlass (60) und jeweils einem Permeat- (64) und Retentatauslass (62)
iii. eine Doppelkopfpumpe, die folgendes umfasst
iv. einen primären Zulaufkopf (28), der mit der Zulaufseite des Filtrationselements (22) verbunden ist, und
v. einen sekundären Retentatkopf (30), der mit der Retentatseite des Filtrationselements (22) verbunden ist
vi. wobei beide Köpfe unterschiedliche Hubvolumen umfassen
vii. beide Köpfe in mechanischer oder hydraulischer Verbindung (38) stehen
viii. so dass eine Kraft an dem sekundären Retentatkopf (30) eine Kraft an dem primären Zulaufkopf (28) ausgleicht, der durch ein Differenzdruckventil (24) **gekennzeichnet** ist
ix. das hydraulisch betätigt wird,
x. wobei das Ventil (24) einen Ablassanschluss des Retentatkopfs (30) abdichtet, wenn der Zulaufdruck den Retentatdruck übersteigt,
xi. wobei die beiden Köpfe (28, 30) eine festgelegte Rückgewinnung bereitstellen, und
xii. das System ein Membranfiltrationselement umfasst.

2. Das Filtrationssystem nach Anspruch 1, wobei die Pumpe eine Diaphragmapumpe ist.

3. Das Filtrationssystem nach Anspruch 1, wobei die beiden Köpfe (28, 30) Diaphragmen (70, 72) unterschiedlicher Radien umfassen.

4. Das Filtrationssystem nach Anspruch 1, wobei der sekundäre Retentatkopf (30) kleiner als der primäre Zulaufkopf (28) ist.

5. Das Filtrationssystem nach Anspruch 1, wobei die Verbindung eine Achse ist.

6. Das Filtrationssystem nach Anspruch 1, wobei die Verbindung (38) und das Ventil (24) eine Druckrückgewinnung in dem Filtrationssystem bereitstellen.

7. Das Filtrationssystem nach Anspruch 6, wobei die Druckrückgewinnung die Energie verringert, die zum Betreiben des Filtrationssystems notwendig ist.

8. Das Filtrationssystem nach Anspruch 1, wobei das Filtrationselement (22) ein Umkehrosmoseelement umfasst.

9. Das Filtrationssystem nach Anspruch 8, wobei das Umkehrosmoseelement ein schraubenförmig umwickeltes Element umfasst.

10. Das Filtrationssystem nach Anspruch 9, wobei das schraubenförmig umwickelte Element folgendes umfasst:
mindestens eine Membran; und
mindestens einen dünnen Zulaufabstandhalter.

11. Das Filtrationssystem nach Anspruch 10, wobei der mindestens eine dünne Zulaufabstandhalter ein Kunststoffnetzgewebe umfasst.

12. Das Filtrationssystem nach Anspruch 10, wobei der mindestens eine dünne Zulaufabstandhalter weniger als etwa 0,025 Zoll dick ist.

13. Das Filtrationssystem nach Anspruch 10, wobei der mindestens eine dünne Zulaufabstandhalter weniger als etwa 0,011 Zoll dick ist.

14. Das Filtrationssystem nach Anspruch 10, wobei der mindestens eine dünne Zulaufabstandhalter für eine Verringerung einer Menge an insgesamt gelösten Feststoffen an einer Oberfläche der Membran sorgt.

15. Das Filtrationssystem nach Anspruch 1, wobei mindestens ein Parameter der optimierten gepulsten Fluidströmung von einer Konfiguration des Filterelements bestimmt wird.

16. Das Filtrationssystem nach Anspruch 15, wobei der Parameter eine Pulsfrequenz und eine Pulsamplitude umfasst.

17. Das Filtrationssystem nach Anspruch 15, das ferner mindestens eine Steuerung zum Verändern der Parameter umfasst.

18. Das Filtrationssystem nach Anspruch 17, wobei die Steuerung manuell ist.

19. Das Filtrationssystem nach Anspruch 17, wobei die Steuerung automatisch ist.

20. Das Filtrationssystem nach Anspruch 17, das ferner mindestens eine Vorrichtung zur Überwachung der Permeatqualität umfasst.

21. Das Filtrationssystem nach Anspruch 20, wobei die mindestens eine Vorrichtung zur Überwachung der Permeatqualität einen Strömungsmesser umfasst.

22. Das Filtrationssystem nach Anspruch 20, wobei die mindestens eine Vorrichtung zur Überwachung der Permeatqualität die Gesamtheit der gelösten Feststoffe misst.

23. Das Filtrationssystem nach Anspruch 22, wobei die mindestens eine Vorrichtung zur Überwachung der Permeatqualität einen Leitfähigkeitsmesser umfasst.

24. Das Filtrationssystem nach Anspruch 20, das ferner eine Rückkopplungsschleife umfasst, wobei die Steuerung zum Optimieren einer Permeatqualität gemäß der Bestimmung mittels der Vorrichtung zur Überwachung der Permeatqualität verändert wird.

25. Das Filtrationssystem nach Anspruch 24, das ferner eine elektrische Messvorrichtung umfasst, wobei die elektrische Messvorrichtung eine Stromstärke in dem System misst.

26. Das Filtrationssystem nach Anspruch 25, wobei die Steuerung zum Minimieren der Stromstärke in dem System zusätzlich verändert wird.

27. Ein Verfahren zum Filtrieren einer Substanz, das die folgenden Schritte umfasst:
Bereitstellen mindestens eines Filtrationselements (22);
Pumpen einer gepulsten Strömung der Substanz zu dem Filtrationselement (22) unter Verwendung einer Doppelkopfpumpe, wobei die Doppelkopfpumpe einen primären Zulaufkopf (28), der mit der Zulaufseite des Filtrationselements (22) verbunden ist, und einen sekundären Retentatkopf (30), der mit der Retentatseite des Filtrationselements (22) verbunden ist, umfasst und in mechanischer oder hydraulischer Verbindung mit dem primären Zulaufkopf steht, wobei der primäre Zulaufkopf (28) und der sekundäre Retentatkopf (30) unterschiedliche Hubvolumen und eine festgelegte Rückgewinnung umfassen;
Ausgleichen einer Kraft an dem primären Zulaufkopf (28) mit einer Kraft an dem sekundären Retentatkopf (30); und Abdichten eines Ablassanschlusses des Retentatkopfs mit einem hydraulisch betätigten differenzdruckaktivierten Ventil (24), wenn ein Zulaufdruck einen Retentatdruck übersteigt.

28. Das Verfahren nach Anspruch 27, wobei der Schritt des Bereitstellens einer Pumpe das Bereitstellen einer Diaphragmapumpe umfasst.

29. Das Verfahren nach Anspruch 27, wobei der Schritt des Bereitstellens einer Doppelkopfpumpe ferner das Bereitstellen einer Druckrückgewinnung umfasst.

30. Das Verfahren nach Anspruch 29, wobei der Schritt des Bereitstellens einer Druckrückgewinnung ferner das Verringern der Energie umfasst, die zum Filtrieren der Substanz notwendig ist.

31. Das Verfahren nach Anspruch 27, wobei der Schritt des Bereitstellens eines Filtrationselements (22) das Bereitstellen eines Umkehrosmoseelements umfasst.

32. Das Verfahren nach Anspruch 31, wobei der Schritt des Bereitstellens eines Umkehrosmoseelements das Bereitstellen eines schraubenförmig umwickelten Elements umfasst.

33. Das Verfahren nach Anspruch 32, wobei der Schritt des Bereitstellens eines schraubenförmig umwickelten Elements das Bereitstellen mindestens einer Membran und mindestens eines dünnen Zulaufabstandhalters in dem Element umfasst.

34. Das Verfahren nach Anspruch 33, wobei der Schritt des Bereitstellens mindestens einer Membran und mindestens eines dünnen Zulaufabstandhalters in dem Element das Verringern der Menge an insgesamt gelösten Feststoffen an einer Oberfläche der Membran umfasst.

35. Das Verfahren nach Anspruch 27, wobei der Schritt des Veränderns mindestens eines Parameters der gepulsten Strömung das Verändern einer Pulsfrequenz und einer Pulsamplitude umfasst.

36. Das Verfahren nach Anspruch 27, wobei der Schritt des Veränderns mindestens eines Parameters der gepulsten Strömung ferner das Messen einer Solleigenschaft des Permeats umfasst.

37. Das Verfahren nach Anspruch 36, wobei der Schritt des Messens der Solleigenschaft des Permeats das Messen einer Permeatströmungsrate umfasst.

38. Das Verfahren nach Anspruch 36, wobei der Schritt des Messens der Solleigenschaft des Permeats das Messen der Gesamtheit der gelösten Feststoffe in dem Permeat umfasst.

39. Das Verfahren nach Anspruch 36, wobei der Schritt des Veränderns mindestens eines Parameters der gepulsten Strömung ferner das Messen einer Stromstärke an der Pumpe umfasst.

40. Das Verfahren nach Anspruch 39, wobei der Schritt des Messens der Stromstärke an der Pumpe ferner das Minimieren der Stromstärke an der Pumpe umfasst.

41. Das Verfahren nach Anspruch 39, das ferner das Bereitstellen einer Rückkopplungsschleife zum automatischen Verändern der Parameter der gepulsten Strömung umfasst, wodurch die Solleigenschaft des Permeats und der Pumpe optimiert wird.

42. Das Filtrationssystem mit Druckrückgewinnung nach Anspruch 7, wobei das Ventil einen Einlassanschluss, der mit dem Retentatkopf (30) verbunden ist, und einen Einlassanschluss, der mit dem Zulaufkopf (28) verbunden ist, umfasst.

43. Das Filtrationssystem mit Druckrückgewinnung nach Anspruch 1, wobei das Ventil gemäß einer relativen Druckdifferenz zwischen den Einlassanschlüssen betätigt wird.

## Revendications

1. Système de filtration comprenant :
i. un élément de filtration (22) avec
ii. une entrée d'alimentation (60) et chacune d'une sortie de perméat (64) et de rétentat (62)
iii. une pompe à tête double comprenant
iv. une tête d'alimentation primaire (28) reliée au côté alimentation de l'élément de filtration (22) et
v. une tête de rétentat secondaire (30) reliée au côté rétentat de l'élément de filtration (22)
vi. les deux têtes comprenant différents volumes balayés
vii. avec les deux têtes en liaison mécanique ou hydraulique (38)
viii. de telle sorte qu'une force sur ladite tête de rétentat secondaire (30) compense une force sur ladite tête d'alimentation primaire (28) **caractérisé par** une soupape à pression différentielle (24)
ix. qui est actionnée hydrauliquement,
x. ladite soupape (24) scellant de façon étanche un orifice de décharge de ladite tête de rétentat (30) lorsque la pression d'alimentation dépasse la pression de rétentat,
xi. les deux têtes (28, 30) assurant une récupération fixe, et
xii. ledit système comprenant un élément de filtration sur membrane.

2. Système de filtration selon la revendication 1, dans lequel ladite pompe est une pompe à membrane.

3. Système de filtration selon la revendication 1, dans lequel lesdites deux têtes (28, 30) comprennent des membranes (70, 72) de différents rayons.

4. Système de filtration selon la revendication 1, dans lequel ladite tête de rétentat secondaire (30) est plus petite que ladite tête d'alimentation primaire (28).

5. Système de filtration selon la revendication 1, dans lequel ladite liaison est un arbre.

6. Système de filtration selon la revendication 1, dans lequel ladite liaison (38) et ladite soupape (24) assurent une récupération de pression pour ledit système de filtration.

7. Système de filtration selon la revendication 6, dans lequel ladite récupération de pression réduit l'énergie requise pour actionner ledit système de filtration.

8. Système de filtration selon la revendication 1, dans lequel ledit élément de filtration (22) comprend un élément d'osmose inverse.

9. Système de filtration selon la revendication 8, dans lequel ledit élément d'osmose inverse comprend un élément enroulé en spirale.

10. Système de filtration selon la revendication 9, dans lequel ledit élément enroulé en spirale comprend :
- au moins une membrane ; et
- au moins un élément d'espacement d'alimentation mince.

11. Système de filtration selon la revendication 10, dans lequel ledit au moins un élément d'espacement d'alimentation mince comprend une maille en nappe en matière plastique.

12. Système de filtration selon la revendication 10, dans lequel ledit au moins un élément d'espacement d'alimentation mince a une épaisseur inférieure à approximativement 0,025 pouce.

13. Système de filtration selon la revendication 10, dans lequel ledit au moins un élément d'espacement d'alimentation mince a une épaisseur inférieure à approximativement 0,011 pouce.

14. Système de filtration selon la revendication 10, dans lequel ledit au moins un élément d'espacement d'alimentation mince permet une réduction d'une quantité de matières solides dissoutes totales à une surface de ladite membrane.

15. Système de filtration selon la revendication 1, dans lequel au moins un paramètre dudit écoulement de fluide pulsé optimisé est déterminé par une configuration dudit élément de filtre.

16. Système de filtration selon la revendication 15, dans lequel ledit paramètre comprend une fréquence de pulsation et une amplitude de pulsation.

17. Système de filtration selon la revendication 15, comprenant en outre au moins une commande pour faire varier lesdits paramètres.

18. Système de filtration selon la revendication 17, dans lequel ladite commande est manuelle.

19. Système de filtration selon la revendication 17, dans lequel ladite commande est automatique.

20. Système de filtration selon la revendication 17, comprenant en outre au moins un dispositif de contrôle de qualité de perméat.

21. Système de filtration selon la revendication 20, dans lequel ledit au moins un dispositif de contrôle de qualité de perméat comprend un débitmètre.

22. Système de filtration selon la revendication 20, dans lequel ledit au moins un dispositif de contrôle de qualité de perméat mesure les matières solides dissoutes totales.

23. Système de filtration selon la revendication 22, dans lequel ledit au moins un dispositif de contrôle de qualité de perméat comprend un dispositif de mesure de conductivité.

24. Système de filtration selon la revendication 20, comprenant en outre une boucle de rétroaction, dans lequel ladite commande est amenée à varier pour optimiser une qualité du perméat telle que déterminée par ledit dispositif de contrôle de qualité de perméat.

25. Système de filtration selon la revendication 24, comprenant en outre un dispositif de mesure électrique, ledit dispositif de mesure électrique mesurant une charge d'intensité de courant sur ledit système.

26. Système de filtration selon la revendication 25, dans lequel ladite commande est amenée à varier pour en outre rendre minimale ladite charge d'intensité de courant sur ledit système.

27. Procédé pour filtrer une substance comprenant les étapes de :
- disposition d'au moins un élément de filtration (22) ;
- pompage d'un écoulement pulsé de la substance vers l'élément de filtration (22) à l'aide d'une pompe à double tête, la pompe à double tête comprenant une tête d'alimentation primaire (28) reliée au côté alimentation de l'élément de filtration (22) et une tête de rétentat secondaire (30) reliée au côté rétentat de l'élément de filtration (22) et en liaison mécanique ou hydraulique avec la tête d'alimentation primaire, la tête d'alimentation primaire (28) et la tête de rétentat secondaire (30) comprenant différents volumes balayés et une récupération fixe ;
- compensation d'une force sur la tête d'alimentation primaire (28) avec une force sur la tête de rétentat secondaire (30) ; et scellement étanche d'un orifice de décharge de la tête de rétentat avec une soupape activée par pression différentielle actionnée hydrauliquement (24) lorsqu'une pression d'alimentation dépasse une pression de rétentat.

28. Procédé selon la revendication 27, dans lequel l'étape de disposition d'une pompe comprend la disposition d'une pompe à membrane.

29. Procédé selon la revendication 27, dans lequel l'étape de disposition d'une pompe à double tête comprend en outre la réalisation d'une récupération de pression.

30. Procédé selon la revendication 29, dans lequel l'étape de réalisation d'une récupération de pression comprend en outre la réduction de l'énergie requise pour filtrer la substance.

31. Procédé selon la revendication 27, dans lequel l'étape de disposition d'un élément de filtration (22) comprend la disposition d'un élément d'osmose inverse.

32. Procédé selon la revendication 31, dans lequel l'étape de disposition d'un élément d'osmose inverse comprend la disposition d'un élément enroulé en spirale.

33. Procédé selon la revendication 32, dans lequel l'étape de disposition d'un élément enroulé en spirale comprend la disposition d'au moins une membrane et d'au moins un élément d'espacement d'alimentation mince dans l'élément.

34. Procédé selon la revendication 33, dans lequel l'étape de disposition d'au moins une membrane et d'au moins un élément d'espacement d'alimentation mince dans l'élément comprend la réduction de la quantité de matières solides dissoutes totales à une surface de la membrane.

35. Procédé selon la revendication 27, dans lequel l'étape de variation d'au moins un paramètre de l'écoulement pulsé comprend la variation d'une fréquence de pulsation et d'une amplitude de pulsation.

36. Procédé selon la revendication 27, dans lequel l'étape de variation d'au moins un paramètre de l'écoulement pulsé comprend en outre la mesure d'une caractéristique désirée du perméat.

37. Procédé selon la revendication 36, dans lequel l'étape de mesure de la caractéristique désirée du perméat comprend la mesure d'un débit de perméat.

38. Procédé selon la revendication 36, dans lequel l'étape de mesure de la caractéristique désirée du perméat comprend la mesure des matières solides dissoutes totales dans le perméat.

39. Procédé selon la revendication 36, dans lequel l'étape de variation d'au moins un paramètre de l'écoulement pulsé comprend en outre la mesure d'une charge d'intensité de courant sur la pompe.

40. Procédé selon la revendication 39, dans lequel l'étape de mesure de la charge d'intensité de courant sur la pompe comprend en outre le fait de rendre minimale la charge d'intensité de courant sur la pompe.

41. Procédé selon la revendication 39, comprenant en outre la disposition d'une boucle de rétroaction pour faire varier automatiquement le paramètre de l'écoulement pulsé, optimisant ainsi la caractéristique désirée du perméat et de la pompe.

42. Système de filtration à récupération de pression selon la revendication 7, dans lequel ladite soupape comprend un orifice d'entrée relié à ladite tête de rétentat (30) et un orifice d'entrée relié à ladite tête d'alimentation (28).

43. Système de filtration à récupération de pression selon la revendication 1, dans lequel ladite soupape s'actionne selon une différence de pression relative entre lesdits orifices d'entrée.
